# EUROPÄISCHE PATENTANMELDUNG

(11) **EP 4 815 269 A1**
(43) Veröffentlichungstag der Anmeldung: **30.09.2026**
(21) Anmeldenummer: 25165593.2
(22) Anmeldetag: 24.03.2025
(51) Int. Cl.: H02K 5/22, H02K 5/15, H02K 5/00, H02K 5/24, H02K 5/18, H02K 5/20

(54) **GEHÄUSELOSE DYNAMOELEKTRISCHE ROTATORISCHE MASCHINE MIT FIXIERBAREN ANBAUELEMENTEN**

(71) Anmelder: Innomotics GmbH, 90441 Nürnberg (DE)
(72) Erfinder: BÜTTNER, Klaus, 97618 Hollstadt (DE); KÖNIG, Martin, 97650 Fladungen (DE); KIRCHNER, Klaus, 97645 Ostheim (DE); WARMUTH, Matthias, 97618 Windshausen (DE); KATZENBERGER, Tobias, 97631 Bad Königshofen STT Untereßfeld (DE)
(74) Vertreter: Michalski Hüttermann & Partner mbB

(57) **Zusammenfassung**

Die Erfindung betrifft eine gehäuselose dynamoelektrische rotatorische Maschine (1), mit einem Stator (2) und einem um eine Achse (6) drehbar gelagerten Rotor (3), der von dem Stator (2) durch einen Luftspalt beabstandet ist,
wobei der Stator (2) einen im Wesentlichen hohlzylindrischen magnetisch leitfähigen Körper aufweist,
wobei der magnetisch leitfähige Körper an seinem Außenumfang (22) verteilt, eine oder mehrere, insbesondere axial verlaufende schwalbenschwanznutförmige Ausnehmungen (19) aufweist,
wobei insbesondere schwalbenschwanzförmig ausgestaltet Anbauelemente (12) zumindest abschnittsweise derart geformt sind, dass sie formschlüssig in die schwalbenschwanznutförmige Ausnehmung (19) eingreifen so zumindest abschnittsweise komplementäre Berührungsflächen bilden,
wobei die Anbauelemente (12) einen Anlagebereich (35), einen Übergangsbereich (36) und einen Funktionsbereich (37) aufweisen, wobei der Anlagebereich (35), zumindest abschnittsweise korrespondierende Berührungsflächen von schwalbenschwanznutförmiger Ausnehmung (19) mit schwalbenschwanzförmigem Eingriff des Anbauelements (12) bildet und zumindest abschnittsweise Mittel zur Fixierung (13) aufweist, wobei der Übergangsbereich (36), der sich zwischen Anlagebereich (35) und Funktionsbereich (37) erstreckt und zumindest abschnittsweise Mittel zur Fixierung aufweist, wobei der Funktionsbereich (37), der Funktionselemente wie Füße, Hebeösen, und Klemmkasten etc. aufweist,
wobei die Anbauelemente (12) in ihren Ausnehmungen (19) durch Fixiermittel (13) positioniert sind.

## Beschreibung

Die Erfindung betrifft eine gehäuselose dynamoelektrische rotatorische Maschine mit einem oder mehreren Anbauelementen.

Dynamoelektrische rotatorische Maschinen, insbesondere Motoren im industriellen Umfeld werden üblicherweise mit einem Gehäuse ausgeführt. Dabei kommen insbesondere Gehäuse aus Aluminium oder Grauguss zum Einsatz. Das Gehäuse wird mittels einer Presspassung kalt oder warm auf einen Stator aufgesetzt.

Zu den Aufgaben dieses Gehäuses gehört u.a. die Kühlung der dynamoelektrischen rotatorischen Maschine, insbesondere des Stators, und Anschlussmöglichkeit von Flanschen, Standfüßen etc. bereitzustellen.

Ein Großteil der Industriemotoren wird demnach als Fußmotor ausgeführt. Diese Standfüße werden dabei generell am Gehäuse der dynamoelektrischen rotatorischen Maschine angeschweißt, angegossen oder angeschraubt.

Ein beschädigtes Gehäuse ist oftmals ein Grund, die gesamte dynamoelektrische Maschine zu entsorgen, da sich eine Reparatur mitunter schwierig gestaltet.

Des Weiteren schränkt ein Gehäuse die Kühleffizienz einer dynamoelektrischen Maschine ein.

Es gibt deshalb auch gehäuselose dynamoelektrische Maschine.

So offenbart die DE 20 37 769 A1 einen oberflächengekühlten gehäuselosen Elektromotor mit Lagerschilden, die am aus rechteckigen Blechen bestehenden Ständerblechpaket abgestützt sind, wobei die Ständerbleche teilweise oder am ganzen Außenumfang derartig geformte Zähne besitzen, dass sie aus Bandmaterial stanzbar sind.

Die DE 78 13 179 U1 offenbart eine gehäuselose elektrische Maschine, vorzugsweise Elektromotor, mit einem Läufer und mit lamelliertem Ständerblechpaket, an dessen beiden Stirnseiten Lagerschilde angeordnet sind, wobei am Umfang des Ständerblechpaketes mindestens eine sich parallel zur Längsachse der Läuferwelle der elektrischen Maschine erstreckende, durch das Ständerblechpaket gebildete Schwalbenschwanzführung vorgesehen ist, die mindestens ein Glied der elektrischen Maschine formschlüssig geradeführt und trägt, welches Glied in seiner Betriebsstellung gegen axiales Verschieben gesichert ist.

Die US 2006/284511 A1 offenbart einen Motor, umfassend einen Statorkern, der aus mehreren Statorblechen gebildet ist und der zumindest teilweise eine Umfangsfläche des Motors bildet. Jeder Statorabschnitt weist mehrere Rippen auf, die sich radial nach außen erstrecken. Beim Zusammenbau bilden die Rippen benachbarter Lamellen zusammen größere Rippen, die sich über die Länge des Statorkerns erstrecken. Diese Lamellen verbessern die Kühlung des Motors, indem sie die Wärmeableitung des Motors verbessern.

Aus der EP 3 944 465 A1 ist eine gehäuselose dynamoelektrische rotatorische Maschine mit einem Stator bekannt, wobei der Stator ein Materiallagengefüge aufweist, wobei das Materiallagengefüge eine Mehrzahl an Materiallagen aufweist, wobei die Materiallagen entlang einer Rotationsachse aneinandergereiht sind, wobei das Materiallagengefüge eine Mehrzahl an Aufdickungen und eine Mehrzahl an Nuten aufweist, wobei eine Nut zwischen zwei Aufdickungen angeordnet ist, wobei wenigstens eine Nut derart ausgebildet ist, dass wenigstens ein Nutkeil aufnehmbar ist, wobei wenigstens eine Aufdickung derart ausgebildet ist, dass der Nutkeil fixierbar ist.

Üblicherweise gibt es drei verschiedene Bauformen von Motoren mit Standfüßen:
Ein sogenannter Fußmotor mit Anschlusskasten oben, seitlich links und seitlich rechts, was eine damit verbundene aufwändige Varianz in den Gehäuseausführungen darstellt.

Die am häufigsten angewandte Methoden einer Fußbefestigung am Gehäuse sind:
Bei einer Fußanbindung mittels angegossener Füße an das Gehäuse wird für jede Ausführungsart des Gehäuses eine eigenes Gussmodell benötigt, mit den unterschiedlichen Winkellagen des Anschlusskastens, womit die Varianz und Kosten steigen. So sind für Gehäuseausführungen mit Anschlusskasten oben, seitlich rechts oder seitlich links, verschieden Gehäusevarianten erforderlich.

Bei separat hergestellten Füßen, die an das Gehäuse angeschraubt werden, wird eine gewisse Flexibilität erreicht, indem Anschraubmöglichkeit der Füße am Gehäuse für verschiedene Positionen des Anschlusskastens vorgesehen werden. Hierzu sind in mindestens 3x 90° Winkelebenen Gewinde zum Anschrauben der Füße eingebracht, die jedoch radial betrachtet, einen erheblichen Raum benötigen, wodurch der Außendurchmesser des Stator Blech-Pakets, bei Einhaltung der Norm, limitiert wird.

Da der Fußabstand zur Motorwelle genormt ist, wird - radial betrachtet - der Außendurchmesser des Stators aufgrund des erforderlichen Raums zur Fußbefestigung limitiert.

Nachteilig bei diesen bekannten dynamoelektrischen rotatorischen Maschine bzw. Motoren ist, dass sie u.a. vergleichsweise aufwändig herzustellen sind, im Betrieb der dynamoelektrischen rotatorischen Maschine eine vergleichsweise geringe Leistungsdichte und Effizienz als auch eine unzureichende Kühleffizienz und ein unzureichendes Schwingungsverhalten, aufweisen.

Zudem ist eine Ausstattung des Gehäuses mit zusätzlichen Gewinden mit weiteren Kosten verbunden.

Ausgehend davon liegt der Erfindung die Aufgabe zugrunde eine dynamoelektrische rotatorische Maschine zu schaffen, die bei einem vergleichsweise einfachen Aufbau eine hohe Kompaktheit bei hoher Leistungsdichte, eine hohe Kühleffizienz, ein geringes Schwingungsverhalten und außerdem für unterschiedlichste Anwendung geeignet ist.

Die Lösung der Aufgabe gelingt durch eine gehäuselose dynamoelektrische rotatorische Maschine gemäß dem unabhängigen Anspruch.

Weitere vorteilhafte Ausgestaltungen sind den abhängigen Ansprüchen zu entnehmen.

Erfindungsgemäß sind an einer gehäuselosen dynamoelektrischen rotatorischen Maschine, mit einem Stator und einem um eine Achse drehbar gelagerten Rotor, der von dem Stator durch einen Luftspalt beabstandet ist, Anbauelemente angebracht.

Der Stator weist einen im Wesentlichen hohlzylindrischen magnetisch leitfähigen Körper auf, der axial geschichtete Bleche oder einen einstückigen gesinterten Körper darstellt.

Der magnetisch leitfähige Körper weist an seinem Außenumfang verteilt, eine oder mehrere axial verlaufende Konturen, bzw. prismatische Geometrien, insbesondere schwalbenschwanznutförmige Ausnehmungen auf. Die umfängliche Verteilung dieser Konturen, insbesondere der axial verlaufenden schwalbenschwanznutförmigen Ausnehmungen kann gleichmäßig oder ungleichmäßig - je nach Anwendungszweck und Einsatzgebiet der gehäuselosen dynamoelektrischen rotatorischen Maschine sein. Zwischen den axial verlaufenden schwalbenschwanznutförmigen Ausnehmungen sind, umfänglich betrachtet, zumindest abschnittsweise Kühlrippen vorgesehen.

Die vorzugsweise schwalbenschwanzförmig ausgestalteten Anbauelemente sind zumindest abschnittsweise derart geformt, dass sie formschlüssig in die schwalbenschwanznutförmige Ausnehmung eingreifen und so zumindest abschnittsweise komplementäre Berührungsflächen bilden.

Die Anbauelemente weisen, insbesondere in einer quasiradialen Betrachtung, einen Anlagebereich, einen Übergangsbereich und einen Funktionsbereich auf. Der Anlagebereich bildet zumindest abschnittsweise korrespondierende komplementäre Berührungsflächen mit seinem Eingriff in die prismatische Geometrie. Insbesondere bildet der Anlagebereich zumindest abschnittsweise korrespondierende komplementäre Berührungsflächen mit seinem schwalbenschwanzförmigem Eingriff in die schwalbenschwanznutförmiger Ausnehmung. Des Weiteren weist der Anlagebereich zumindest abschnittsweise auch Mittel zur Fixierung in der schwalbenschwanznutförmigen Ausnehmung auf. Der Übergangsbereich, der sich zwischen Anlagebereich und Funktionsbereich erstreckt kann optional zumindest abschnittsweise auch Mittel zur Fixierung aufweisen., Der Funktionsbereich weist Funktionselemente wie Füße, Hebeösen, und Teile eines Klemmkasten etc. auf. Die Trennung dieser Bereiche ist abhängig von der konkreten Ausgestaltung und dem Zweck des Anbauelements.

Die Anbauelemente sind in ihren Ausnehmungen durch Fixiermittel positioniert. Dies geschieht durch dementsprechende Mittel im Übergangsbereich und/oder Anlagebereich der Anbauelemente.

Erfindungsgemäß werden dabei am Außendurchmesser des Stators - unabhängig ob einstückiger magnetisch leitfähiger Körper oder Blechpaket - schwalbenschwanznutförmige Ausnehmungen bzw. prismatische Geometrien bzw. Konturen geschaffen. Die Geometrien können auch als prismatische korrespondierende Geometrien oder zumindest abschnittsweise prismatische korrespondierende Geometrien bezeichnet werden. Deren Anlagebereiche sind somit zumindest abschnittweise zu den korrespondierenden Flächen der Anbauelemente komplementär.

Bei Einzelblechen werden dabei während des Herstellverfahrens (Stanzen) des Blechpakets diese zusätzlichen, prismatischen Geometrien gestanzt, die schließlich am gestapelten Blechpaket des Stators zumindest axial abschnittweise eine prismatische Aufnahme, insbesondere schwalbenschwanznutförmige Ausnehmungen für Anbauelemente, wie Füße, Flansche etc. ergeben.

Die Befestigung der Anbauelemente wird somit durch Festklammern oder Klemmen in eine entsprechende vorgegebene Kontur, insbesondere am Stator ermöglicht. Es ergibt sich ein Formschluss in radialer Richtung.

Das Festklammern der Anbauelemente kann je nach Ausführung der Anbauelemente und Ausgestaltung zumindest der Anlagebereiche sowohl in radialer Fügebewegung (radiales Eindrehen) als auch in axialer Richtung zur entsprechend vorgegebener Geometrie am Stator erfolgen.

Dies gelingt indem zumindest Abschnitte des Anlagebereich und optional des Übergangsbereichs elastisch formbar ausgebildet sind. Dies erleichtert den axialen oder radialen Einbau des Anbauelementes in die Kontur, insbesondere in die schwalbenschwanznutförmige Ausnehmung. Das Anbauelement, konkret der Anlagebereich und optional der Übergangsbereich ist dazu mit einer elastischen Geometrie aufgebaut, die zumindest während des Fügeprozesses in einer am Stator vorgegebenen Kontur eine Verformung erfährt, so dass sich das Anbauelement mit machbaren Kräften Eindrehen oder Einschieben lässt, ohne dass Beschädigungen am Stator und/oder Anbauelement entstehen.

Nach Erreichen der vorgegebenen Endposition des Anbauelements ist aufgrund der vorhandenen Elastizität weiterhin ein Klammer- oder Klemmeffekt vorhanden. Die Verformung kann in einem elastischen oder auch leicht plastischen Bereich liegen. Die Endposition der Anbauelemente in der Kontur kann durch geeignete Fixiermittel in lösbarer oder unlösbarer Art und Weise fixiert werden.

Die elastische Formbarkeit, die ein axiales Einsetzen oder ein axiales und radiales Einsetzen des Anbauelementes in die schwalbenschwanznutförmige Ausnehmung ermöglicht, ist durch eine elastische Geometrie, insbesondere im Anlagebereich des Anbauelements als offene oder geschlossene Kontur ausgebildet. Die elastische Geometrie im Anlagebereich kann sowohl als offene Kontur als ein Art Klammer oder auch als geschlossene Kontur mit Klemmeffekt ausgebildet werden.

Die Anbauelemente sind zumindest in Abschnitten ihres Anlagebereiches schenkelförmig ausgeführt, wobei diese Schenkel in vorgebbarer Weise voneinander beabstandet sind. Es bildet sich somit im eingesetzten Zustand ein axial verlaufender Schlitz zwischen den Schenkeln aus.

Je nach Ausführung des Anbauelements ist dabei nur ein axiales Einsetzen in die schwalbenschwanznutförmige Ausnehmung oder ein axiales und radiales Einsetzen des Anbauelementes in die schwalbenschwanznutförmige Ausnehmung möglich.

Pro schwalbenschwanznutförmiger Ausnehmung kann somit entweder kein, ein oder mehrere Anbauelemente vorgesehen werden. Entsprechend dieser Kontur werden die Anbauelemente mit einer dazu passenden - also komplementären - gegenseitigen Geometrie vor allem im Anlagebereich der Anbauelemente zum Fixieren in der schwalbenschwanznutförmigen Ausnehmung ausgestattet.

Ein radiales Einsetzen des Anbauelements in die schwalbenschwanznutförmige Ausnehmung wird ermöglicht, indem die Breite der Schenkel im Anlagebereich im zusammengedrückten Zustand ungefähr gleich groß oder kleiner ist als die umfängliche Öffnung der Schwalbenschwanznut.

Vorteilhaft ist eine in der Breite der Schenkel asymmetrische Ausgestaltung, womit ein Schenkel derart beweglich ist, dass ein radiales Einsetzen des Anbauelements in die schwalbenschwanznutförmige Ausnehmungen erleichtert wird.

Zumindest im Bereich des Schlitzes, insbesondere im Bereich des Gabelungspunkts der Schenkel, sind Fixiermittel einsetzbar, die ein axiales Verschieben der Anbauelemente in ihrer schwalbenschwanznutförmigen Ausnehmung verhindern. Im Anlagebereich und/oder Übergangsbereich werden zumindest abschnittsweise Mittel zur Fixierung vorgesehen. Wichtig ist jedoch, dass die elastische Funktion am Fuß, nach dem Positionieren gesperrt wird, um eine sichere Fußbefestigung im Betrieb am Stator zu gewährleisten und keine unerwünschten Schwingungen oder Lockerungen entstehen zu lassen.

Je nach Ausführung des Anbauelements sind verschiedene Methoden zur Fixierung in der Endposition möglich.

Eine Möglichkeit besteht darin den elastischen Bereich, vor allem im Anlagebereich mit Füllkleber auszufüllen. Zusätzlich zum Klammern bzw. Klemmen wird also nach dem Fügen der Anbauelemente ein Füllkleber (vorzugsweise ein Gapfiller) in den elastischen Bereich von Anlagebereich und optional Übergangsbereichs eingebracht, damit die Federfunktion gesperrt wird, wodurch eine weitere Veränderung des Anbauelements nicht mehr möglich ist, und so ein sicherer Halt des Anbauelements in der Kontur gewährleistet ist.

Neben dieser Sperrfunkton bewirkt das Füllmaterial zusätzlich eine Verklebung des Anbauelements, insbesondere des Anlagebereichs am Stator. Dadurch ergibt sich eine weitere Sicherheit in der Haftung des Fußes am Stator. Je nach Fügemethode in radialer oder axialer Richtung ist damit ein weiteres Verschieben des Anbauelements in oder gegen die Fügerichtung durch Verklebung ausgeschlossen.

Um eine vorteilhafte Verteilung des Klebers zu erreichen ist das Anbauelement mit einer quasiradialen Versorgungsbohrung durch zumindest den Übergangsbereich und Anlagebereich und mindestens einem axial verlaufenden Verteilkanal ausgestattet, damit der Kleber an dafür vorgesehenen Stellen mit der optimalen Menge zur Verfügung steht.

Optimalerweise wird ein 2K Harz Härter System mit einer Thixotropie zum Füllen und Verkleben genutzt, um ein Weglaufen des Klebers nach dem Füllvorgang zu vermeiden.

Das Einbringen des Materials geschieht mit einer Mischdüse unter Druck.

Eine weitere Möglichkeit zur Fixierung besteht darin, den elastischen Bereich, vor allem im Anlagebereich mit einem Spannstift zu verspannen. Dieser Spannstift wird in axialer Richtung oder quasiradialer Richtung im elastischen Bereich eingesetzt. Dazu werden nach dem Positionieren des Anbauelements in axialer oder quasiradialer Richtung Spannstifte in dafür vorgesehen Bohrungen eingetrieben, die sich insbesondere an der Gabelung der Schenkel im Anlagebereich oder Übergangsbereich befindet. Der Spannstift hat ein Übermaß zur Bohrung. Somit wird die zum Fügen des Anbauelements benötigte elastische Funktion gesperrt und das Anbauelement hat einen sicheren Halt, auch in axialer Richtung.

Mit dieser Methode ist auch eine Demontage des Anbauelements möglich, was einen Austausch des Anbauelements oder eine Zerlegung des Motors vereinfacht.

Eine weitere Möglichkeit zur Fixierung besteht, darin den elastischen Bereich, vor allem im Anlagebereich des Anbauelements mit einer einzusetzenden Schraube zu verspannen oder zu blockieren. Diese Schraube wird in axialer Richtung oder quasiradialer Richtung im elastischen Bereich eingesetzt. Dazu werden nach dem Positionieren der Anbauelemente in axialer oder quasiradialer Richtung Schrauben eingesetzt. Auch hier bewirkt die Schraube ein zusätzliches Verspannen und verhindert eine Zurückfedern der elastischen Komponente vor allem im Anlagebereich. Vorzugsweise wird eine gewindefurchende Schraube verwendet, die insbesondere axial an der Gabelung der Schenkel eingesetzt wird. Alternativ dazu kann die Schraube auch quasiradial in einen Quermutterbolzen zwischen den Schenkel eingedreht werden.

Auch mit dieser Methode ist auch eine Demontage des Anbauelements möglich, was einen Austausch des Anbauelements oder eine Zerlegung des Motors vereinfacht.

Als Fixiermittel der Anbauelemente in ihrer schwalbenschwanznutförmige Ausnehmung, sind somit Kleber und/oder eingedrehte Schrauben (axial oder quasiradial) und/oder Nieten (axial oder quasiradial) und/oder Spannstifte (axial oder quasiradial) vorgesehen.

An wenigstens einem axialen Ende des Stators ist ein Endelement, insbesondere ein Lagerschild angeordnet, wobei das Endelement mittels wenigstens eines Verbindungselements mit dem Stator mechanisch verbunden ist.

Das Anbauelement ist beispielsweise als Standfuß, Hebeöse, Umrichterhalterung, Halterung für Klemmkasten, Stützfuß oder als Halterung einer Überwachungsvorrichtung ausgebildet, und wird grundsätzlich immer auf eine der beschriebenen Arten am Außenumfang des Stators befestigt.

Es wird somit in einer ersten Ausprägung auf ein Gehäuse verzichtet. Die Anbauelemente werden somit direkt am Statorpaket befestigt. Durch das Weglassen eines Gehäuses bleibt unter Einhaltung der Normabmessungen radial mehr Raum für das Statorpaket im Außendurchmesser.

Zudem wird die Befestigung der Anbauelemente ohne radiale Befestigungsschrauben realisiert, so dass sich ein weiterer Raumgewinn durch den Verzicht auf Gewinde ergibt.

Dadurch kann das Statorpaket im Außendurchmesser nochmals vergrößert werden.

Damit weist auch der Jochrücken des Blechpakets des Stators eine gleichmäßige radiale Dicke auf. Der Jochrücken des Stators hat damit mehr aktive Fläche.

Damit wird ein möglichst großer Außendurchmesser des Stators ermöglicht. Je größer jedoch der Außendurchmesser des Stator Pakets, desto kompakter und effizienter kann der Motor gebaut werden, da die sich Leistungsdichte im Durchmesser quadratisch im Vergleich zur Baulänge auswirkt.

Um die Effizienz weiter zu steigern ist das Anbauelement zur Optimierung der Kühlung der dynamoelektrischen Maschine zumindest abschnittsweise verrippt ausgeführt.

Der Stator ist zumindest abschnittsweise mit einer Beschichtung, insbesondere einer metallischen Beschichtung bedeckt, was beispielsweise bei Einsatz einer dynamoelektrischen Maschine mit einem derartigen Stator in aggressiver Umgebung oder in der Nahrungsmittelindustrie vorteilhaft ist.

Bei den oben genannten Ausführungen ergeben sich somit ein radialer Raumgewinn für das Außenmaß des Stators aus der Einsparung des Gehäuses und aus der Einsparung von radialen Gewinden zur Befestigung der Anbauelemente.

In einer weiteren Ausführung kann diese Art der Fixierung von Anbauelementen auch an einem vorhandenen Motorgehäuse mit dementsprechender Kontur vorgesehen werden. Die Raumeinsparung ergibt sich auch dabei aus der Einsparung durch Verzicht auf radiale oder quasiradiale Gewinde.

Der wesentliche Unterschied zum Stand der Technik besteht u.a. darin, dass die Anbauelemente, insbesondere Fußbefestigung ohne radiale Gewinde oder einem direkten Angießen an ein Gehäuse erfolgt und somit die Varianz verringert oder der dadurch zusätzlich zur Verfügung stehende Aktivteildurchmesser für das Erreichen einer höheren Motoreffizienz innerhalb einer Motorachshöhe genutzt werden kann.

Somit ist in der Asynchrontechnik die Effizienzklasse einer dynamoelektrischen Maschine auch in den kleineren Achshöhen < 100 mm hochgerechnet in IE6 erreichbar.

Da eine Schnittstelle (Gehäuse) weniger vorhanden ist, ist eine höhere Festigkeit in der Anbindung an den Stator und damit auch geringere Schwingungen erreichbar.

Durch dieses Verspannen werden unerwünschte Mikrobewegungen an den Anbauelementen, insbesondere der Fußbefestigung, die aus elektromagnetischen oder mechanischen Unwuchten der gehäuselose dynamoelektrische rotatorische Maschine entstehen, reduziert.

Auch der Entfall einer mechanischen Schnittstelle, (Gehäuse - Stator), wirkt sich positiv auf die Schwingungsanfälligkeit des Gesamtsystems, also der gesamten dynamoelektrischen rotatorischen Maschine aus.

Die Steifigkeit dieses Befestigungssystems ist damit höher als z.B. bei einer vergleichsweise bekannten Fußbefestigung an einem Gehäuse einer dynamoelektrischen rotatorischen Maschine.

Vorzugsweise werden die Festigkeitswerte der Materialien dieses Befestigungssystems so gewählt, dass sich die Verformung aufgrund der Verspannung der daran beteiligten Bauteile, wie Anbauelemente, Befestigungselemente im elastischen Bereich bewegt.

Damit ist auch ein erneutes Montieren von neuen Anbauelemente nach einer Demontage möglich.

Stirnseitige scharfe Kanten, insbesondere der axial und/oder radial äußeren Bleche bzw. Blechabschnitte werden durch in einem Lagerschild integrierte Abdeckungen abgedeckt. Die Verletzungsgefahr an den scharfen Kanten der äußeren Bleche wird somit reduziert. Ebenso wird dadurch ein Abplatzen von Farbe (nach dem Lackieren) an diesen Kanten vermieden.

Bei der erfindungsgemäßen Befestigung werden Anbauelemente direkt am Stator fixiert, also ohne die Schnittstelle zu einem Gehäuse. Dadurch wird insbesondere eine Befestigung von Standfüssen oder Flanschen mit erheblich höherer Steifigkeit als bei der Befestigung von Standfüssen oder Flanschen an einem Gehäuse erzielt.

Kritische Schwingungsbewegungen, wie seitliches Wippen und/oder längliches Wippen des Stators und damit der Maschine, werden reduziert.

Die Funktion einer Befestigung verschiedener Anbauelemente wird in den Stator integriert, womit bei einer gehäuselosen dynamoelektrischen rotatorischen Maschine eine Möglichkeit geschaffen ist, trotz Einsparung des Gehäuses eine technisch verbesserte Fixierung bei gleichzeitiger Erhöhung der Leistungsdichte zu erhalten.

Bei einem geblecht ausgeführten Stator ist es aufgrund der hohen Fertigungsgenauigkeit aus der Stanztechnik möglich, auf eine Flächenbearbeitung an den Anbauelemente an der gesamten dynamoelektrischen rotatorischen Maschine zu verzichten. Diese Flächen können somit bereits bei der Bearbeitung z.B. am Einzelfuß hergestellt werden. Die zulässige Toleranz in einer Motor-Achshöhe (Fußfläche bis Motorachse) kann durch die Fuß- und Montagetoleranz eingehalten werden.

Im Falle eines Flanschmotors (also einer dynamoelektrischen rotatorischen Maschine ohne Füße) dienen die - nicht belegten - prismatischen Geometrien, insbesondere die schwalbenschwanznutförmige Ausnehmungen mit ihrer Formgebung auch als Kühlrippen.

Ein Lackieren der Innenseite der schwalbenschwanznutförmigen Ausnehmungen, also der Rinnen, ist problemlos möglich. Die Toleranz in der Lackschichtstärke kann durch das Befestigungselement kompensiert werden, da dieses in seiner radialen Position in einem Toleranzbereich von ca. 500µm ohne Probleme funktioniert.

In einer Ausführung ist an wenigstens einem axialen Ende des Stators ein Endelement, insbesondere Lagerschild angeordnet, wobei das Endelement mittels wenigstens eines Verbindungselements mit dem Stator mechanisch verbunden ist.

Somit wird die schwalbenschwanznutförmige Ausnehmung axial abgeschlossen, wobei durch die Endelemente eine Paketierung des Stators und eine Fixierung der Lagerschilde geschaffen wird.

Der Grund der schwalbenschwanznutförmige Ausnehmungen liegt vorzugsweise auf dem gleichen Radius wie der Grund zwischen zwei benachbarten Kühlrippen. Mit anderen Worten: der Radius eines Rillengrundes ist nahezu gleich dem Radius der schwalbenschwanznutförmigen Ausnehmung.

Durch Wahl der Füße und/oder deren Positionierungen an der gehäuselosen dynamoelektrischen rotatorischen Maschine lässt sich das Schwingungsverhalten beeinflussen.

In einer Ausführung lassen sich pro schwalbenschwanznutförmigen Ausnehmung ein, zwei oder drei Anbauelemente vorsehen. Dies sind nicht nur Füße, sondern auch andere Anbauelemente, wie Umrichterhalterungen, Halterung für einen Klemmkasten, Klemmenkastensockel, Halterung für eine Überwachungsvorrichtung oder Transportösen etc..

Um die Kühlung der gehäuselosen dynamoelektrischen rotatorischen Maschine weiter zu verbessern, weist der magnetisch leitfähige Körper Kühlrippen auf, die am Außenumfang des Stators im Wesentlichen radial oder zumindest abschnittsweise parallel ausgerichtet sind.

Ein weiterer Kühleffekt wird dadurch geschaffen, dass die Anbauelemente zumindest abschnittsweise mit Rippen versehen sind.

Um die Wirbelströme im Betrieb der gehäuselosen dynamoelektrischen rotatorischen Maschine weiter zu reduzieren ist der magnetisch leitfähige Körper aus Blechen aufgebaut, wobei jedes Blech einstückig ausgeführt ist und zumindest Nuten eines Wicklungssystems und schwalbenschwanznutförmige Ausnehmungen aufweist. Die Nuten des Wicklungssystems sind dabei einer Statorbohrung zugewandt, während die schwalbenschwanznutförmigen Ausnehmungen am radial äußeren Rand der Bleche bzw. der Blechpakets vorgesehen sind. Diese Bleche sind axial geschichtet und bilden somit ein Blechpaket des Stators mit einer oder mehreren axial verlaufenden Rinnenstrukturen der schwalbenschwanznutförmigen Ausnehmungen.

Diese vorzugsweise gestanzten Bleche sind miteinander stoffschlüssig, insbesondere verklebt und/oder an Abschnitten verschweißt oder durch Zuganker axial fixiert, um das Blechpaket des Stators zu paketieren.

Vorteilhaft werden die Einzelbleche während eines Stanzprozesses oder nach dem Stanzen miteinander zu einem Stator-Eisenpaket paketiert. Dies gelingt besonders gut durch vollflächiges Verkleben der Einzelbleche.

Stattdessen oder optional zum Verkleben kann das Blechpaket auch mittels Zuganker axial verspannt werden. Diese Zuganker sind vorzugsweise in den axial ersten und letzten Blechen des Blechpakets implementiert oder sind in den Endelementen - also beispielsweise den Lagerschilden - vorgesehen.

Dabei werden die beidseitig vorgesehenen Lagerschilde vorzugsweise mit Schrauben oder Nieten oder Zugankern verspannt, umso auch das Blechpaket axial zu verspannen.

Vollflächiges Verkleben bietet zudem den Vorteil, dass die Einzelbleche zueinander abgedichtet sind. Auf diese Weise wird ein guter Schutz gegen Berührung, Fremdköper und Wasser erreicht.

Wenn bei der gehäuselosen dynamoelektrischen rotatorischen Maschine das Endelement als Lagerschild ausgeführt ist und die axial verlaufenden schwalbenschwanznutförmige Ausnehmungen axial zumindest teilweise abdeckt, wird die Positionierung der Anbauelemente zusätzlich erleichtert.

Falls das Endelement als Lagerschild ausgeführt ist, kann dieses vorteilhafterweise die schwalbenschwanznutförmigen Ausnehmungen axial zumindest teilweise abschließen.

In einer weiteren Ausführung weist zumindest ein Endelement zumindest Teile eines Klemmenkastens auf, der zur Versorgung der dynamoelektrischen rotatorischen Maschine mit elektrischer Energie dient. Damit wird die Teilevielfalt an einer dynamoelektrischen rotatorischen Maschine reduziert.

Die Kühlrippen des Stators und die Kühlrippen des Endelements sind vorteilhaft axial in einer Flucht angeordnet, um über die axiale Länge eine möglichst gleichmäßige Kühlung zu erhalten.

Der Stator, insbesondere das Blechpaket des Stators ist insbesondere an seiner äußeren Mantelfläche zumindest abschnittsweise mit einer Beschichtung bedeckt, um einen Schutz gegen Berührung, Korrosion, Fremdköper und Wasser zu erhalten.

In einer vorteilhaften Ausführung ist der Stator mit einer Beschichtung derart versehen, dass eine dichte, glatte und damit leicht zu reinigende Oberfläche aufweist. Dies ist vor allem im medizinischen Bereich oder in der Nahrungsmittelindustrie besonders wichtig.

Ferner ist die Beschichtung nicht nur an der Oberfläche dazu geeignet, in einem innenliegenden Bereich der Nuten eine Isolationsschicht zwischen Wicklung und den Statorblechen zu bilden.

Am Außenumfang ist z.B. auch eine metallische Beschichtung möglich. Denkbar sind dabei eine galvanische Beschichtung, eine Beschichtung durch thermisches Flammspritzen oder Kaltgasspritzen sowie eine Beschichtung durch ein Tauchverfahren (z.B. Verzinken).

Vorzugsweise wird nur eine Beschichtungsart angewandt, die für außenliegende Bereich des Stators sowie für innenliegende Bereiche (Wicklungsnuten) geeignet ist. Besonders gut eignet sich hierfür eine Beschichtung auf Harzbasis, die beispielsweise durch Lackieren oder Tauchen aufgebracht wird. Eine elektrostatisches Pulverbeschichtung (z.B. mit einer anschließenden thermischen Behandlung) stellt eine weitere Möglichkeit dar.

Die metallische Beschichtung weist vorteilhaft eine Dicke zwischen 20µm und 70µm auf, insbesondere zwischen 30µm und 60µm. Eine Kunststoffbeschichtung weist Werte zwischen 60µm und 500µm auf.

Ferner ist eine Beschichtung denkbar, die Lack und/oder Harz aufweist. Diese können auf Polyester- (ungesättigt) und/oder Epoxidbasis sein. Es sind auch Silikone denkbar.

Durch die Beschichtung ist der Stator z. B. gegen Korrosion und somit Rostbildung geschützt. Dies gelingt z. B. durch Tauchen in ein Rostschutzsubstrat und/oder durch Lackieren mit dem Rostschutzsubstrat.

Überdies kann eine elektrische Isolation durch die Beschichtung erzeugt werden. Dies erfolgt z.B. durch Füllstoffe in der Beschichtung.

Vorteilhaft werden hierbei zur Verbesserung gegen Abrieb, vorzugsweise im Außenbereich der dynamoelektrischen Maschine, keramische Füllstoffe verwendet. Keramische Füllstoffe können auch zur Steigerung einer Isolationsfähigkeit und Wärmeleitung, insbesondere in einem Nutbereich für die Wicklung, verwendet werden.

Als Füllstoffe eignen sich zudem wärmeleitfähige Partikel, z.B. Quarzsand, oder teilentladungsbeständige Partikel, insbesondere auf Siliziumbasis.

Erfindungsgemäß wird auf ein konventionelles Gehäuse verzichtet. Bisherige Gehäusefunktionen, wie Halterungen für Standfüße, Flansche etc. sind in den Stator integriert ausgeführt, indem diese schwalbenschwanznutförmige Ausnehmungen in die jeweiligen Einzelblech während des Stanzprozesses gestanzt werden.

Das Lagerschild weist vorteilhaft eine Aufnahme für ein Lager zur Lagerung einer Welle des Rotors auf. Vorteilhaft weist die gehäuselose dynamoelektrische rotatorische Maschine ein Lagerschild an einer A-Seite (einer Arbeitsmaschine zugewandte Seite) und ein Lagerschild an einer B-Seite (einer Arbeitsmaschine abgewandte Seite) auf. Das Lagerschild kann axial fluchtende Rippen aufweisen, ebenso wie an den Stirnseiten oberflächenvergrößernde Strukturen, um eine weitere Kühlung zu erhalten.

Vorteilhaft weist auch das Lagerschild Rippen auf, die mit den Kühlrippen des magnetisch leitfähigen Körpers des Stators axial fluchten.

Wickelköpfe eines Wicklungssystems des Stators, die vorzugsweise axial unter Abschnitten eines Endelement positioniert sind, können somit ihre Verlustwärme somit besser abgeben. Auf diese Weise kann der Wirkungsgrad der gehäuselosen dynamoelektrischen rotatorischen Maschine gesteigert werden.

In einer vorteilhaften Ausführung weist das Endelement einen Anschlusskasten auf, der zur Versorgung mit elektrischer Energie der dynamoelektrischen Maschine geeignet ist.

In einer vorteilhaften Ausführung weist das Endelement einen Klemmkastensockel auf und ist zur Verbindung mit einem Klemmkasten ausgebildet.

Die Erfindung bietet auch den Vorteil, dass ein Recycling der dynamoelektrischen Maschine vereinfacht wird, da kein Gehäuse mehr vorhanden ist und die Anbauelemente abnehmbar fixiert sind. Eine Wicklung kann z.B. bei Beschädigung aus dem Blechpaket des Stators entfernt und eine neue Wicklung eingebracht werden. Eine Wiederverwendung des Blechpakets dieses Stators und der dort anbringbaren Komponenten ist somit leichter möglich.

Die Erfindung bietet zudem den Vorteil, dass eine Bearbeitung von Zentrierungen nicht erforderlich ist. Hierzu wird der Grund der schwalbenschwanznutförmigen Ausnehmungen im Stator genutzt. Das Generieren einer Genauigkeit einer Koaxialität und damit letztlich der Positionierung eines Rotors in einer Statorbohrung (umfänglich gleichmäßiger Luftspalt) ist durch das Stanzen der Einzelbleche vergleichsweise einfach und die dadurch erzielte Genauigkeit sehr hoch.

Die Maschine mit verschiedenen, leistungsbezogenen Längen der Blechpakete innerhalb einer Achshöhe, kann somit möglichst kurz ausgeführt sein. Eine Maschinenlänge, also die Länge des Aktivteils (Blechpakets des Stators mit Wicklung) ist somit nicht abhängig von einem eigens bereitzustellenden Gehäuse. Ein dementsprechend langer Stator, kann durch mehrere Anbauelemente in einer axial verlaufenden schwalbenschwanznutförmige Ausnehmung gestützt werde. Z.B. durch - insbesondere vorgeschriebene Standfüsse und weitere optionale Stützfüsse.

Lagerschilde werden also nicht an einer expliziten Gehäusefläche befestigt, sondern direkt am magnetisch leitfähigen Körper, insbesondere einem Blechpaket des Stators.

Das Blechpaket des Stators kann aber auch eigenständig über Zugankerverbindung paketiert werden. Dabei werden insbesondere die Bleche an den Stirnseiten mit dementsprechenden Zugankerösen versehen.

Erfindungsgemäß wird damit der Außendurchmesser des Stators gegenüber vergleichbaren dynamoelektrischen Maschinen mit Gehäuse vergrößert. Durch einen größeren Stator-Außendurchmesser besteht nunmehr auch die Möglichkeit, einen Rotor-Außendurchmesser ebenso größer zu gestalten und somit eine höhere Leistung bzw. einen höheren Wirkungsgrad zu erzielen. Damit ist auch eine verbesserte Wärmeabfuhr gegeben.

Die Erfindung eignet sich für sämtliche Anwendungsgebiete von dynamoelektrischen rotatorischen Maschinen, insbesondere für Industrieanwendungen wie Pumpen-, Lüfter-, Kompressor-Antriebe sowie für Förderanlagen. Derartige Maschinen lassen sich auch in der Nahrungsmittelindustrie, aber auch bei Anwendungen in der Verkehrstechnik als Traktions-Antrieb oder als Hilfsantrieb einsetzen.

Die Erfindung sowie weitere vorteilhafte Ausgestaltungen der Erfindung werden anhand prinzipiell dargestellter Ausführungsbeispiele näher erläutert, darin zeigen:
- FIG 1: einen Längsschnitt einer prinzipiell dargestellten gehäuselose dynamoelektrischen rotatorischen Maschine,
- FIG 2: ein Blech,
- FIG 3: ein Blechpaket in perspektivischer Darstellung,
- FIG 4: ein magnetisch leitfähiger Körper in perspektivischer Darstellung,
- FIG 5: ein Lagerschild,
- FIG 6: ein Schnitt durch eine Befestigung eines Fußes,
- FIG 7: eine teilperspektivische Darstellung einer Befestigung eines Fußes,
- FIG 8,9: Fixierungen der Schenkel,

- FIG 10: eine Seitenansicht der Befestigung eines Fußes,
- FIG 11: ein Schnitt durch eine Befestigung eines Fußes,
- FIG 12: eine teilperspektivische Darstellung eines Fußelements,
- FIG 13: ein Schnitt durch eine Befestigung eines Fußes,
- FIG 14: eine teilperspektivische Darstellung eines Fußelements,
- FIG 15: eine teilperspektivische Darstellung eines Fußelements,
- FIG 16: eine teilperspektivische Darstellung eines Fußelements,
- FIG 17: Fixierungen der Schenkel,
- FIG 18: Fußelement mit Schenkeln,
- FIG 19: Fixierung der Schenkel.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Achse 6 eines Rotors 3 und damit auf die entsprechende Symmetrieachse des Stators 2. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse 6 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 3 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen idealerweise derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden. Nachdem aber in technischen Gebieten sehr selten idealisierte Gegebenheiten vorliegen, wird dabei in der Regel zwischen den beiden Gegenständen von gewissen Spalten auszugehen sein. Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

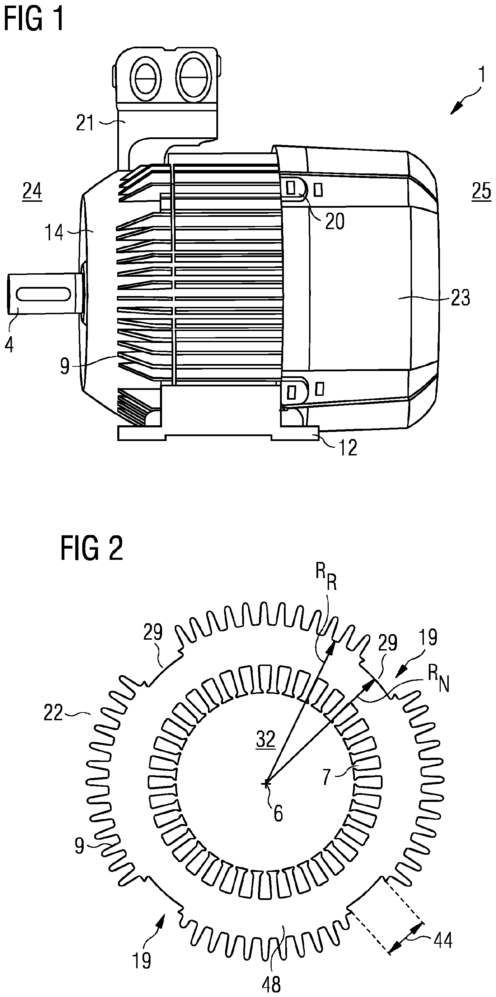

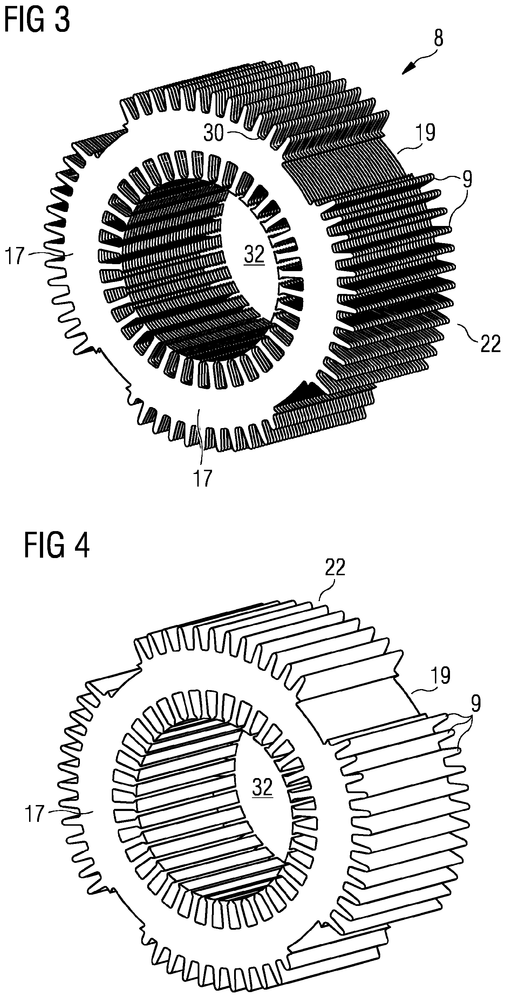

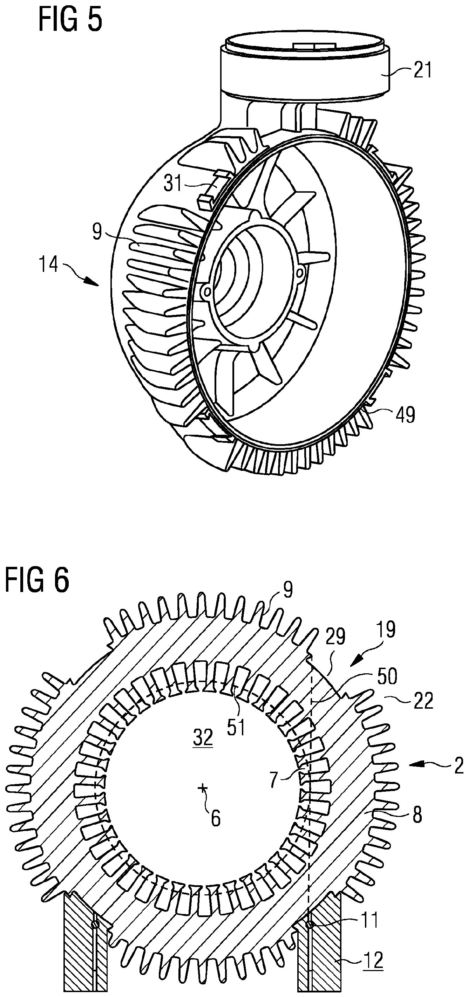

FIG 1 zeigt eine gehäuselose dynamoelektrische rotatorische Maschine 1. Diese Maschine 1 umfasst einen Stator 2, einen Rotor 3 sowie eine Welle 4. Der Rotor 3 kann als Kurzschlussläufer oder permanenterregter Läufer oder als Reluktanzläufer ausgeführt sein. Der Stator 2 ist aus einem magnetisch leitfähigen Körper aus gesintertem Material (wie z.B. in FIG 5 dargestellt) oder aus axial geschichteten Blechen (wie z.B. in FIG 4 dargestellt) aufgebaut. An einem Außenumfang 22 des Stators 2, insbesondere an einem Außenumfang 22 des Blechpakets 8, sind u.a. Kühlrippen 9 ausgebildet.

An den Stirnseiten 17 des Stators 2 sind Lagerschilde 14 angeordnet.

FIG 1 zeigt ferner, dass auch das Lagerschild 14, als ein mögliches Endelement zumindest abschnittsweise Kühlrippen aufweist. Das Lagerschild 14 weist außerdem zumindest Teile eines Anschlusskasten bzw. Klemmenkastensockels 21 auf.

Die Maschine 1 weist auf der B-Seite 25 eine Haube 23 auf. Die Maschine 1 ist vorzugsweise eigenbelüftet ausgeführt und weist vorteilhaft einen nicht näher dargestellten Lüfter in der Haube 23 auf. Die Haube 23 dient einer Abschirmung dieses Lüfters und der Luftführung. Diese Haube 23 ist z.B. mittels einer Schnappverbindung 20 am Stator 2 oder einem Endelement fixiert.

Des Weiteren zeigt FIG 1 Anbauelemente 12, die als Standfüße ausgebildet sind und deren Befestigung am magnetisch leitfähigen Körper, insbesondere am Blechpaket 8 des Stators 2 in den weiteren Figuren beschrieben wird.

Die Anbauelement 12 können grundsätzlich auch als Gussteil oder aus einem Strangpressprofil ausgeführt sein.

FIG 2 zeigt einen Querschnitt des magnetisch leitfähigen Körpers des Blechpakets 8 des Stators 2. Das Blechpaket 8 ist aus axial geschichteten Blechen aufgebaut. Vorzugsweise sind diese Einzelbleche vollflächig miteinander verklebt. Am Außenumfang 22 des Stators 2 verteilt, sind in dieser Ausführung vier axial verlaufende Konturen, bzw. prismatische Geometrien, insbesondere schwalbenschwanznutförmige Ausnehmungen 19 vorgesehen. Die Anzahl und/oder deren konkrete Gestaltung und/oder umfängliche Anordnung kann je nach Ausführung des Stators 2 variieren.

Die Einzelbleche des Blechpakets 8 sind einstückig ausgeführt und weisen einer Statorbohrung 32 zugewandt, somit Nuten 7 zur Aufnahme eines nicht näher dargestellten Wicklungssystems auf. Am Außenumfang 22 sind Kühlrippen 9 und die insbesondere schwalbenschwanznutförmige Ausnehmungen 19 vorgesehen. Die Einzelbleche werden vorteilhaft durch Stanzen hergestellt. Eine Kühlung ist somit im Stator 2 integriert. Ein Wärmeübergang von den Wärmequellen eines Stator 2 (Wicklungssystem, Eisenverluste, Wirbelstromverluste etc.) im Betrieb einer dynamoelektrischen rotatorischen Maschine 1 zu den Kühlrippen 9 ist somit optimal.

Der Rillengrund 29 der schwalbenschwanznutförmige Ausnehmungen 19 weist einen Radius R_{N} auf. Der innere Radius R_{R} der Kühlrippen 9 ist in dieser Ausführung größer als R_{N}.

Um jedoch umfänglich überall die gleich radiale Dicke des Jochrückens 48 zu erhalten, ist er erstrebenswert, dass R_{N}=R_{R} ist.

FIG 3 ein Blechpaket 8 gemäß FIG 2 in perspektivischer Darstellung. Die schwalbenschwanznutförmigen Ausnehmungen 19 verlaufen über die gesamte axiale Länge des Blechpakets 8 des Stators 2. Um ein Auffächern der Einzelbleche an der prismatischen Kontur der schwalbenschwanznutförmiger Ausnehmung 19 zu vermeiden, werden die Einzelbleche des Stators 2 miteinander vollflächig oder teilweise verklebt, stanzpaketiert oder verschweißt. Um diese Bleche, insbesondere in den Außenbereichen zu fixieren wird vorzugsweise über die gesamte axiale Länge des Blechpakets 8 Stators 2 eine Schweißnaht 30 vorgesehen. Vorzugsweise wird Laserschweißen eingesetzt.

FIG 4 zeigt einen magnetisch leitfähigen, einstückigen Körper des Stators 2 mit seinen axial durchgängigen schwalbenschwanznutförmige Ausnehmungen 19 in perspektivischer Darstellung.

FIG 5 zeigt ein Lagerschild, 14 das an einer Stirnseite 17 des Blechpakets 8 des Stators 2, vorzugsweise auf der A-Seite 24 angebracht werden kann. Es weist Kühlrippen 9, eine umlaufende Ausnehmung 49, eine Abdeckung 31 der schwalbenschwanznutförmigen Ausnehmungen 19 und eine Klemmenkastensockel 21 auf. Eine Abdichtung von Stator 2 und Lagerschild 14 gelingt besonders gut durch einen O-Ring, der in die umlaufende Ausnehmung 49 eingesetzt wird. Auf diese Weise ist die Maschine 1 besonders gut gegen Fremdkörper und Berührung sowie Wasser geschützt. Die Maschine 1 weist somit eine Eignung für die Schutzklassen IP54 und IP55 auf. Auch eine geschäumte Dichtung kann in umlaufende Ausnehmung 49 eingebracht werden.

FIG 6 zeigt in einer prinzipiellen Darstellung einen Schnitt durch eine Befestigung eines als Standfuß ausgebildetes Anbauelements 12 am magnetisch leitfähigen Körper des Stators 2. In den zwei unteren schwalbenschwanznutförmige Ausnehmungen 19 sind dementsprechende Anbauelemente12 mit einem Funktionsbereich 37 als Standfuß angebracht. In diesem Fall tritt eine Fixierung der Anbauelemente 12 mittels Kleber 27 auf, der durch einen quasiradialen Füllkanal 26, der durch den Funktionsbereich 37, den Übergangsbereich 36 und den Anlagebereich 35 verläuft, den abschnittsweise korrespondierende Berührungsflächen von schwalbenschwanznutförmiger Ausnehmung 19 mit dem schwalbenschwanzförmigem Eingriff des Anbauelements 12 zugeführt wird.

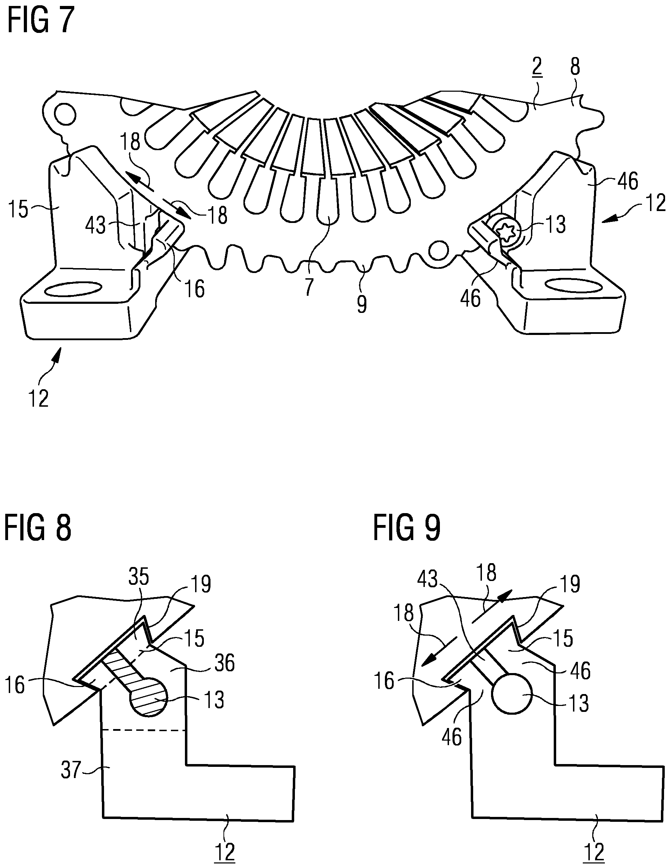

Die Fixierung eines Anbauelements 12 wird in FIG 7 bis 9 in am Beispiel einer Befestigung eines Fußes am Außenumfang 22 des Stators 2 gezeigt. Die dort gezeigte Anbauelemente 12 sind in ihrem Anlagebereich 35 axial betrachtet axial jeweils gleich ausgeführt. D.h. diese Anbauelemente 12 könnten sowohl axial in die schwalbenschwanznutförmiger Ausnehmung 19 eingeschoben werden als auch radial eingesetzt bzw. eingedreht werden. Der Anlagebereich 35 weist jeweils zwei Schenkel 46 auf, die durch eine Schlitz 43 getrennt sind. Die beiden Schenkel 46 sind asymmetrisch ausgeführt, sodass sich ein nahezu starrer Backen 15 und ein beweglicher Backen 16 gegenüber liegen. Dies ermöglicht ein zusammendrücken der beiden Schenkel 46 und eine Positionierung in der schwalbenschwanznutförmigen Ausnehmung 19.

Durch Fixierelemente, wie Schrauben 13, Kleber 27, Spannstifte etc. lässt sich der Schlitz 43 zwischen den Schenkeln 46 zumindest abschnittsweise blockieren, so dass sich eine Verkeilwirkung 18 zwischen dem Anlagebereich 35 und der schwalbenschwanznutförmigen Ausnehmung 19 ergibt.

Die Fixierelemente werden vorzugsweise im Bereich des Gabelungspunktes 47 der Schenkel 46 und/oder im weiteren Verlauf des Schlitzes 43 eingesetzt.

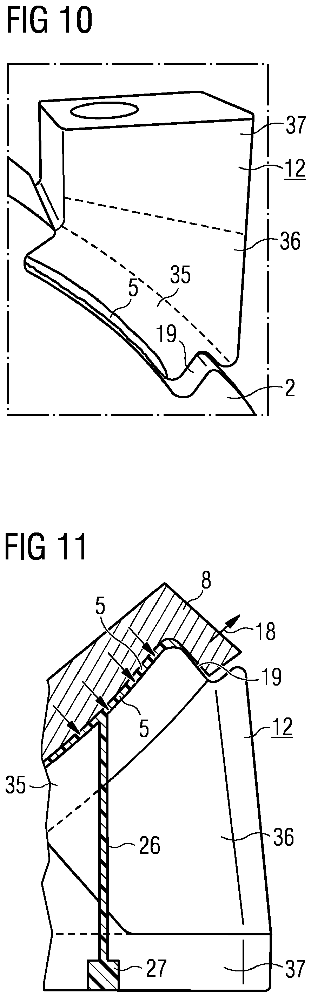

FIG 10 zeigt in einer prinzipiellen Darstellung einen Schnitt durch eine Befestigung eines als Standfuß ausgebildetes Anbauelements 12 am magnetisch leitfähigen Körper des Stators 2. Diese Art Anbauelement 12 kann nur axial in die schwalbenschwanznutförmige Ausnehmung 19 eingesetzt werden. Über zumindest einen Füllkanal 26 wird ein Kleber 27 den abschnittsweise korrespondierende Berührungsflächen von schwalbenschwanznutförmiger Ausnehmung 19 mit dem schwalbenschwanzförmigem Eingriff des Anbauelements 12 im Anlagebereich 35 zugeführt. Da die korrespondierenden Flächen nie flächendeckend exakt aufeinanderliegen, entsteht ein Spalt 5, der durch den Kleber 27 gefüllt wird, wobei gleichzeitig eine Verkeilwirkung 18 einsetzt.

FIG 11 zeigt in einer prinzipiellen Darstellung einen Schnitt durch eine Befestigung eines als Standfuß ausgebildetes Anbauelements 12 am magnetisch leitfähigen Körper des Stators 2 mittels Kleber 27. Durch einen quasiradialen Füllkanal 26, der durch den Funktionsbereich 37, den Übergangsbereich 36 und den Anlagebereich 35 verläuft, wird den abschnittsweise korrespondierende Berührungsflächen von schwalbenschwanznutförmiger Ausnehmung 19 mit dem schwalbenschwanzförmigem Eingriff des Anbauelements 12 und einen Spalt 5 bilden Kleber 27 zugeführt.

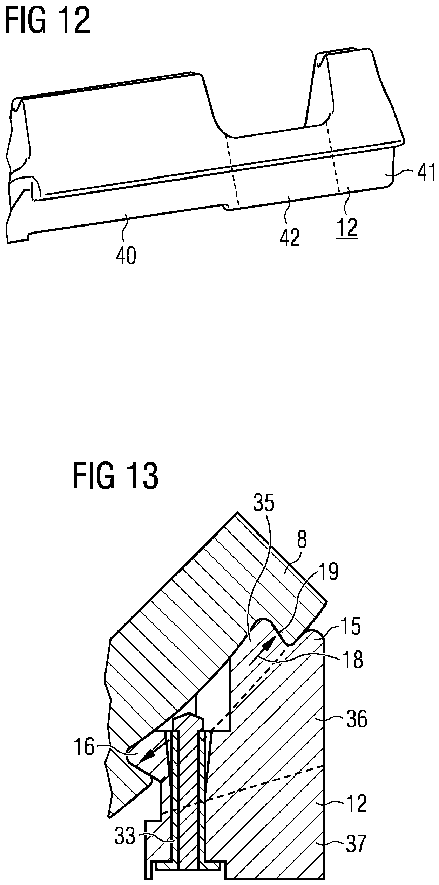

FIG 12 eine teilperspektivische Darstellung eines Anbauelements 12, das als Fußelement ausgebildet ist. Das Fußelement besteht aus unterschiedlichen axialen Abschnitten. Ein Abschnitt Standfuß 40 und daran einstückig angeschlossener Abschnitt Stützfuß 41, die durch ein Stegelement 42 verbunden sind. Dieses Fußelement ist für allen für axial längere Statoren 2 wichtig, die aus dem Normbereich fallen, wo ein Standfuß 40 ausreichend ist. Dieses Anbauelement 12 ist konstruktionsbedingt ebenfalls nur für eine axiales Einsetzen in die schwalbenschwanznutförmiger Ausnehmung 19 geeignet. Die aufgeführten Fixiermittel können dabei eingesetzt werden.

Die beiden Füße, also Standfuß 40 und Stützfuß 41 können auch getrennt ausgeführt sein, und separat in die gleiche axial verlaufende schwalbenschwanznutförmige Ausnehmungen 19 eingesetzt und jeweils dann für sich, mit den beschriebenen Fixiermitteln fixiert werden.

FIG 13 zeigt in einer prinzipiellen Darstellung einen Schnitt durch eine Befestigung eines als Standfuß ausgebildetes Anbauelements 12 in der schwalbenschwanznutförmigen Ausnehmung 19 am magnetisch leitfähigen Körper des Stators 2 mittels einer Niet 33, Schraube oder Spanstift. Dieses Anbauelements 12 kann konstruktionsbedingt aufgrund seiner beiden Schenkel 46 - wie oben beschrieben - axial und radial eingesetzt werden. Durch die quasiradiale Bohrung wird eine Niet 33 eingetrieben, womit sich die angestrebte Verkeilwirkung 18 einstellt.

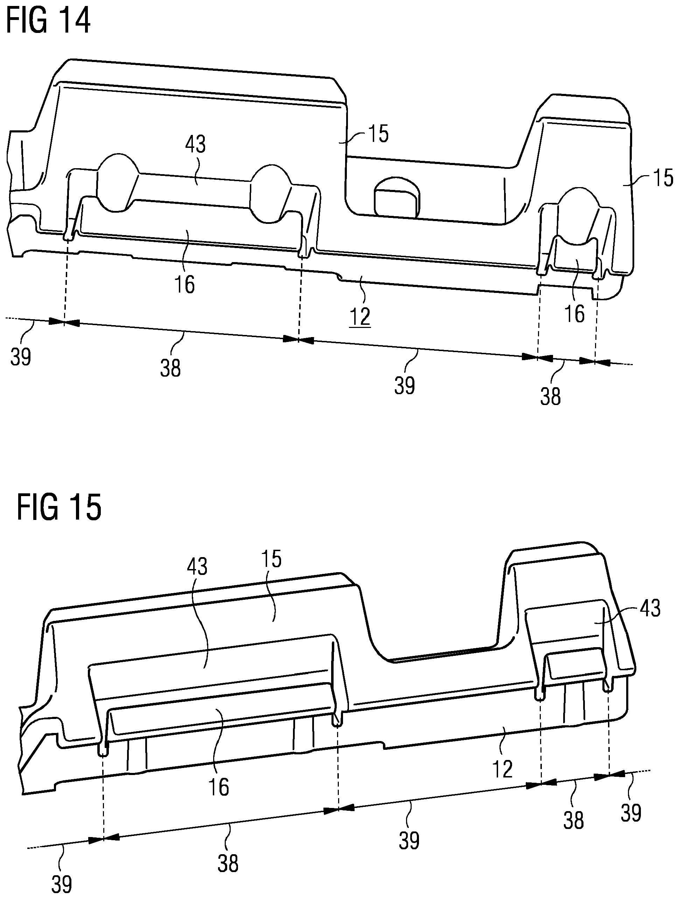

FIG 14 bis 17 zeigt in jeweils teilperspektivische Darstellung ein Anbauelement 12, das jeweils als Fußelements ausgebildet ist.

Dieses Fußelement weist jeweils unterschiedlichen axiale Abschnitten auf. Ein Abschnitt Standfuß 40 und daran einstückig angeschlossener Abschnitt Stützfuß 41 die durch ein Stegelement 42 verbunden sind. Sowohl Standfuß 40 als auch Stützfuß 41 weisen flexible Abschnitte 38 als auch starre Abschnitte 39 auf. Die flexiblen Abschnitte 38 der Anlagebereiche 35 weisen jeweils zwei Schenkel 46 auf, die durch eine Schlitz 43 getrennt sind. Die beiden Schenkel 46 sind asymmetrisch ausgeführt, sodass sich ein nahezu starrer Backen 15 und ein beweglicher Backen 16 gegenüber liegen. Dies ermöglicht ein zusammendrücken der beiden Schenkel 46 und eine Positionierung in der schwalbenschwanznutförmigen Ausnehmung 19.

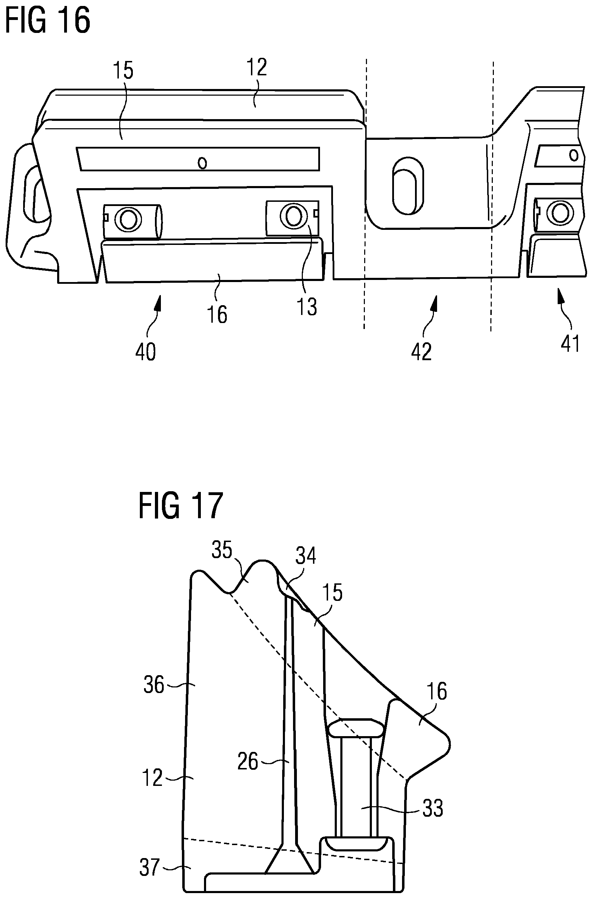

FIG 17 zeigt in einer prinzipiellen Darstellung einen Schnitt durch eine Befestigung eines ebenfalls als Standfuß ausgebildetes Anbauelements 12 für eine schwalbenschwanznutförmige Ausnehmung 19 am magnetisch leitfähigen Körper des Stators 2 mittels einer Niet 33, Schraube oder Spanstift. Dieses Anbauelements 12 kann konstruktionsbedingt aufgrund seiner beiden Schenkel 46 - wie oben beschrieben - axial und radial eingesetzt werden. Durch die quasiradiale Bohrung wird z.B. eine Niet 33 eingetrieben, womit sich die angestrebte Verkeilwirkung 18 einstellt. Zusätzlich kann durch einen quasiradialen Füllkanal 26, der durch den Funktionsbereich 37, den Übergangsbereich 36 und den Anlagebereich 35 verläuft, ein Spalt 5 zwischen abschnittsweise korrespondierende Berührungsflächen von schwalbenschwanznutförmiger Ausnehmung 19 mit dem schwalbenschwanzförmigem Eingriff des Anbauelements 12 gefüllt werden. Eine zusätzlich zu dem Rillengrund 29 weisende axial verlaufende Ausnehmung 34 am Anlagebereich 35 sorgt auch für eine Verteilung des Klebers 27 in axialer Richtung.

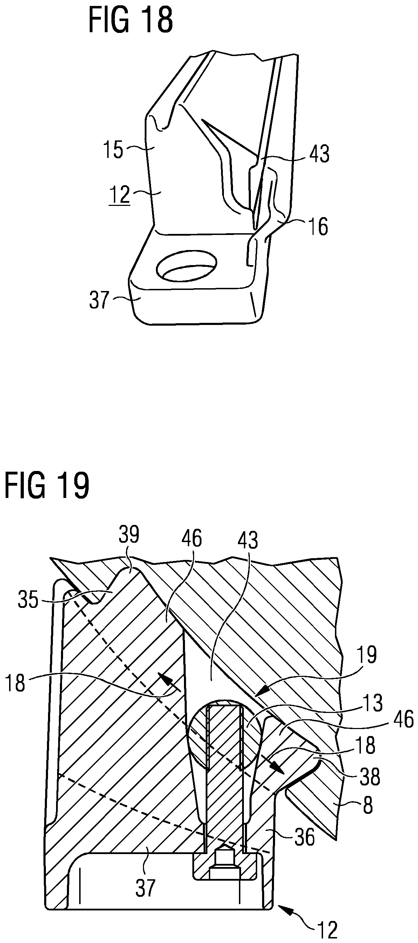

FIG 18 zeigt eine teilperspektivische Darstellung eines Anbauelements 12, das als Fußelement ausgebildet ist. Dieses Anbauelemente 12 kann sowohl axial in die schwalbenschwanznutförmiger Ausnehmung 19 eingeschoben werden als auch radial eingesetzt bzw. eingedreht werden. Der Anlagebereich 35 weist jeweils zwei Schenkel 46 auf, die durch eine Schlitz 43 getrennt sind. Die beiden Schenkel 46 sind asymmetrisch ausgeführt, sodass sich ein nahezu starrer Backen 15 und ein beweglicher Backen 16 gegenüber liegen. Dies ermöglicht ein Zusammendrücken der beiden Schenkel 46 und eine Positionierung in der schwalbenschwanznutförmigen Ausnehmung 19.

Durch Fixierelemente, wie Schrauben 13, Kleber 27, Spannstifte etc. lässt sich der Schlitz 43 zwischen den Schenkeln 46 nach dem Einsetzen und Positionieren zumindest abschnittsweise blockieren, so dass sich eine Verkeilwirkung 18 zwischen dem Anlagebereich 35 und der schwalbenschwanznutförmigen Ausnehmung 19 ergibt.

FIG 19 zeigt neben den oben erwähnten Ausführungen eine weitere Möglichkeit die Anbauelemente 12 durch Blockieren oder gar Aufspreizen der Schenkel 46 in der schwalbenschwanznutförmigen Ausnehmung 19 zu fixieren. Dabei wird ein Spannstift oder eine Schraube quasiradial in einen im Schlitz 43 vorhandenen Quermutterbolzen (siehe auch FIG 16) eingesetzt. Durch eindrehen der Schraube zieht sich dieser Quermutterbolzen in den Schlitz und treibt dadurch die Schenkel 46 in Richtung 18 auseinander, was zu einer Verklemmung des Anbauelements 12 in der schwalbenschwanznutförmigen Ausnehmung 19 führt.

Unter quasiradial wird dabei geometrisch verstanden, dass die Eindrehrichtung 50 der Schraube oder Ausrichtung 50 des Füllkanals (gemäß FIG 6) streng genommen nicht auf die Achse 6 gerichtet ist, sondern vielmehr als Tangente an einen gedachten Kreis 51 mit der Achse 6 als Mittelpunkt zu sehen ist.

Ein Recycling der dynamoelektrischen Maschine, sowie eine Aufbereitung von Motorbauteilen werden durch diese Erfindung vereinfacht.

Durch die erfindungsgemäße Vergrößerung der Außendurchmesser am Stator 2 und Rotor 3 ist es möglich, die Maschine 1 kompakter auf die Achshöhe bezogene Leistung zu gestalten. Die Hüllmaße sind dabei nicht größer als bei einer Maschine mit Gehäuse.

Die Erfindung eignet sich für sämtliche Anwendungsgebiete von dynamoelektrischen rotatorischen Maschinen 1, insbesondere für Antriebe bei Industrieanwendungen wie Pumpen-, Lüfter-, Kompressor-Antriebe sowie für Förderanlagen. Derartige Maschinen 1 lassen sich auch in der Nahrungsmittelindustrie, aber auch bei Anwendungen in der Verkehrstechnik als Traktions-Antrieb oder als Hilfsantrieb einsetzen.

### Bezugszeichenliste

- 1: dynamoelektrische rotatorische Maschine
- 2: Stator
- 3: Rotor
- 4: Welle
- 5: Spalt
- 6: Achse
- 7: Nut für Wicklungssystem
- 8: Blechpaket
- 9: Kühlrippen
- 10: Befestigungselement
- 11: Verbindungselement
- 12: Anbauelement
- 13: Sperrelement
- 14: Lagerschild
- 15: starrer Backen
- 16: beweglicher Backen
- 17: Stirnseite Blechpaket
- 18: Verkeilwirkung
- 19: schwalbenschwanznutförmige Ausnehmungen
- 20: Schnappverbindung
- 21: Klemmenkastensockel
- 22: Außenumfang Stator
- 23: Haube
- 24: A-Seite
- 25: B-Seite
- 26: Füllkanal
- 27: Kleber
- 29: Rillengrund
- 30: Laserschweißnaht
- 31: Abdeckung
- 32: Statorbohrung
- 33: Niet
- 34: Ausnehmung
- 35: Anbaubereich
- 36: Übergangsbereich
- 37: Funktionsbereich

- R_{R}: Radius Rillengrund
- R_{N}: Radius Schwalbenschwanznut

- 38: flexibler Abschnitt
- 39: starrer Abschnitt
- 40: Standfuß
- 41: Stützfuß
- 42: Stegelement
- 43: Schlitz
- 44: umfängliche Öffnung der schwalbenschwanznutförmige Ausnehmungen
- 45: Verteilkanal
- 46: Schenkel
- 47: Gabelungspunkt
- 48: Jochrücken
- 49: umlaufende Ausnehmung
- 50: Eindrehrichtung
- 51: gedachter Kreis

## Patentansprüche

1. Gehäuselose dynamoelektrische rotatorische Maschine (1), mit einem Stator (2) und einem um eine Achse (6) drehbar gelagerten Rotor (3), der von dem Stator (2) durch einen Luftspalt beabstandet ist,
wobei der Stator (2) einen im Wesentlichen hohlzylindrischen magnetisch leitfähigen Körper aufweist,
wobei der magnetisch leitfähige Körper an seinem Außenumfang (22) verteilt, eine oder mehrere, insbesondere axial verlaufende schwalbenschwanznutförmige Ausnehmungen (19) aufweist,
wobei insbesondere schwalbenschwanzförmig ausgestaltet Anbauelemente (12) zumindest abschnittsweise derart geformt sind, dass sie formschlüssig in die schwalbenschwanznutförmige Ausnehmung (19) eingreifen so zumindest abschnittsweise komplementäre Berührungsflächen bilden,
wobei die Anbauelemente (12) einen Anlagebereich (35), einen Übergangsbereich (36) und einen Funktionsbereich (37) aufweisen, wobei der Anlagebereich (35), zumindest abschnittsweise korrespondierende Berührungsflächen von schwalbenschwanznutförmiger Ausnehmung (19) mit schwalbenschwanzförmigem Eingriff des Anbauelements (12) bildet und zumindest abschnittsweise Mittel zur Fixierung (13) aufweist, wobei der Übergangsbereich (36), der sich zwischen Anlagebereich (35) und Funktionsbereich (37) erstreckt und zumindest abschnittsweise Mittel zur Fixierung aufweist, wobei der Funktionsbereich (37), der Funktionselemente wie Füße, Hebeösen, und Klemmkasten etc. aufweist,
wobei die Anbauelemente (12) in ihren Ausnehmungen (19) durch Fixiermittel (13) positioniert sind.

2. Gehäuselose dynamoelektrische rotatorische Maschine (1) nach Anspruch 1, **dadurch gekennzeichnet, dass** zumindest Abschnitte des Anlagebereich (35) und des Übergangsbereichs (36) elastisch formbar ausgebildet sind.

3. Gehäuselose dynamoelektrische rotatorische Maschine (1) nach Anspruch 2, **dadurch gekennzeichnet, dass** die elastische Formbarkeit durch eine elastische Geometrie im Anlagebereich (35) des Anbauelements (12) als offene oder geschlossene Kontur ausgebildet ist.

4. Gehäuselose dynamoelektrische rotatorische Maschine (1) nach Anspruch 3, **dadurch gekennzeichnet, dass** die Anbauelemente (12) zumindest in Abschnitten ihres Anlagebereiches (25) schenkelförmig ausgeführt sind, die voneinander in vorgebbarer Weise voneinander beabstandet sind.

5. Gehäuselose dynamoelektrische rotatorische Maschine (1) nach Anspruch 4, **dadurch gekennzeichnet, dass** der Abstand ein radiales Einsetzen des Anbauelements (12) in die schwalbenschwanznutförmige Ausnehmung (19) ermöglicht, indem die Breite der Schenkel (46) im zusammengedrückten Zustand ungefähr gleich oder kleiner ist als die Öffnung (44) der schwalbenschwanznutförmige Ausnehmung (19).

6. Gehäuselose dynamoelektrische rotatorische Maschine (1) nach Anspruch 4 bis 5, **dadurch gekennzeichnet, dass** die Schenkel (46) asymmetrisch ausgebildet sind, derart, dass ein Schenkel derart beweglich ist, um ein radiales Einsetzen des Anbauelements (12) in die schwalbenschwanznutförmige Ausnehmungen (19) zu ermöglichen.

7. Gehäuselose dynamoelektrische rotatorische Maschine (1) nach einem der Ansprüche 4 bis 6, **dadurch gekennzeichnet, dass** zumindest im Bereich des Schlitzes (43), insbesondere im Bereich des Gabelungspunkts (47) der Schenkel (46) Fixiermittel, insbesondere Sperrelemente (13) vorhanden sind, die ein axiales und/oder radiales Verschieben der Anbauelemente (12) in der schwalbenschwanznutförmigen Ausnehmung (19) verhindern.

8. Gehäuselose dynamoelektrische rotatorische Maschine (1) nach Anspruch 7, **dadurch gekennzeichnet, dass** als Fixiermittel der Anbauelemente (12) in ihrer schwalbenschwanznutförmigen Ausnehmung (19) Kleber (27) und/oder eine axial eingedrehte Schraube und/oder einen Spannstift und/oder ein Niet (33) vorgesehen ist, die jeweils axial oder quasiradial angeordnet sind.

9. Gehäuselose dynamoelektrische rotatorische Maschine (1) nach einem der vorhergehenden Ansprüche, **dadurch gekennzeichnet, dass** die Anbauelemente (12) Kanäle (26) aufweisen, die ein Fixieren der Anbauelemente (12) in der schwalbenschwanznutförmige Ausnehmung (19) mittels Kleber (27) gestatten.

10. Gehäuselose dynamoelektrische rotatorische Maschine (1) nach Anspruch 9, **dadurch gekennzeichnet, dass** die Kanäle (26) quasiradial oder tangential durch zumindest den Anlagebereich (35) und den Übergangsbereich (36) des Anbauelements (12) verlaufen.

11. Gehäuselose dynamoelektrische rotatorische Maschine (1) nach einem der vorhergehenden Ansprüche, **dadurch gekennzeichnet, dass** an wenigstens einem axialen Ende (24,25) des Stators (2) ein Endelement, insbesondere Lagerschild (14) angeordnet ist, wobei das Endelement mittels wenigstens eines Verbindungselements (11) mit dem Stator (2) mechanisch verbunden ist.

12. Gehäuselose dynamoelektrische rotatorische Maschine (1) nach einem der vorhergehenden Ansprüche, **dadurch gekennzeichnet, dass** das Anbauelement (12) als Standfuß, Hebeöse, Umrichterhalterung, Halterung für Klemmkasten oder als Halterung einer Überwachungsvorrichtung ausgebildet ist.

13. Gehäuselose dynamoelektrische rotatorische Maschine (1) nach einem der vorhergehenden Ansprüche, **dadurch gekennzeichnet, dass** das Anbauelement (12) zumindest abschnittsweise verrippt ausgeführt ist.

14. Gehäuselose dynamoelektrische rotatorische Maschine (1) nach einem der vorhergehenden Ansprüche, **dadurch gekennzeichnet, dass** wenigstens der Stator (2) zumindest abschnittsweise mit einer Beschichtung, insbesondere einer metallischen und/oder einer isolierenden Beschichtung bedeckt ist.

15. Verwendung einer gehäuselosen dynamoelektrischen rotatorischen Maschine (1) nach einem der vorhergehenden Ansprüche als Antrieb von Verdichtern, Pumpen, Kompressoren, oder Lüftern in einem industriellen Umfeld, in der Nahrungsmittelindustrie oder bei Traktionsanwendungen.
